Europäisches Patentamt

**European Patent Office**

**Office européen des brevets**

(19)

(11) Numéro de publication: **0 280 620 B1**

(12) **FASCICULE DE BREVET EUROPEEN**

(45) Date de publication de fascicule du brevet: **13.10.93** (51) Int. Cl.⁵: **B01D 24/00**

(21) Numéro de dépôt: **88400395.5**

(22) Date de dépôt: **22.02.88**

(54) **Appareil de filtration et procédé de nettoyage d'un tel appareil.**

(30) Priorité: **23.02.87 FR 8702285**

(43) Date de publication de la demande:
**31.08.88 Bulletin 88/35**

(45) Mention de la délivrance du brevet:
**13.10.93 Bulletin 93/41**

(84) Etats contractants désignés:
**BE CH DE ES FR GB IT LI NL**

(56) Documents cités:
**DE-A- 3 433 472**
**GB-A- 2 021 428**

(73) Titulaire: **DEGREMONT S.A.**
**183, Avenue du 18 Juin 1940**
**F-92508 Rueil-Malmaison Cédex(FR)**

(72) Inventeur: **Vital, Jean-Louis**
**44, rue du Chemin Vert**
**F-92100 Boulogne(FR)**
Inventeur: **Lemmel, Hubert**
**7 bis rue Marcelin Berthelot**
**F-92000 Nanterre(FR)**

(74) Mandataire: **Debay, Yves**
**Cabinet Yves Debay, 122 Elysee 2**
**F-78170 La Celle Saint Cloud (FR)**

Rank Xerox (UK) Business Services
(3.10/3.6/3.3.1)

EP 0 280 620 B1

EP 0 280 620 B1

**Description**

La présente invention concerne un appareil de filtration et le procédé de nettoyage d'un tel appareil.

Les appareils de filtration ou filtres habituellement utilisés pour l'élimination des matières en suspension contenues dans les fluides à traiter, tels que des eaux brutes, sont constitués par des lits de matériaux granulaires, du type sable, anthracite, pierre ponce, biolite, ... Ces matériaux présentent une masse volumique particulaire supérieure à celle du fluide à traiter et constituent un lit dit "lit fixe" reposant sur un support appelé plancher du filtre. Durant la phase de filtration, le fluide circule selon un flux descendant dans ce lit qui reste fixe. Dans la suite du texte, lorsque l'on parlera de masse volumique, on entendra masse volumique particulaire. Pendant cette phase, les matières en suspension retenues par ce lit, encrassent en profondeur ce dernier.

Un lavage du lit de filtrage à intervalles réguliers, réalise l'évacuation des matières retenues suivant les deux étapes ci-après. Ce lavage effectue, d'une part un détachement des matières retenues, d'autre part le transport de ces matières jusqu'à un point de rejet. En général, la seconde étape est assurée par de l'eau.

La phase de lavage est effectuée, soit avec un lit dit fluidisé, soit avec un lit dit agité. Le lavage par lit fluidisé consiste à laver le lit de filtration par retour d'eau selon un flux ascendant, à une vitesse supérieure à la vitesse minimale de fluidisation. Dans ce cas, le lit fixé dans lequel les matériaux filtrants étaient en contact entre eux s'expanse et les grains de matériaux qui sont maintenus en suspension dans le courant de fluide, ne se touchent plus. Par suite, lors de cette phase, les matières en suspension ne sont plus retenues par les grains du matériau filtrant et se détachent.

Le lavage par lit agité consiste à faire circuler de l'eau selon un flux ascendant avec une vitesse inférieure à la vitesse minimale de fluidisation et en introduisant simultanément de l'air dans ce flux ascendant. L'introduction des bulles d'air provoque à la fois un abaissement de la densité moyenne du fluide et une agitation des matières de filtration. Pendant cette agitation, les matières en suspension se détachent.

Dans la suite du texte on appelle un lavage par retour d'eau selon un flux inverse au flux correspondant à la phase de filtration, un rétrolavage, couramment appelé dans la littérature anglosaxone backwash.

D'autres appareils de filtration comportent ce qu'il est convenu d'appeler un lit flottant fixé. Ce lit flottant est constitué de matériaux dont la masse volumique est inférieure à celle du fluide à traiter qui en général est de l'eau. Ce lit de matériaux qui flottent dans l'eau est maintenu immergé au moyen d'un dispositif connu de blocage, tel qu'une grille, et dans ce cas on parle d'un lit flottant fixé.

Un tel dispositif est connu par GB-A-1 305 399 dans lequel le lit flottant fixé est constitué de granules ou boulettes de polystyrène maintenues dans l'enceinte d'un filtre par une cloison perforée selon des dimensions inférieures à la dimension des granules et disposée perpendiculairement à l'axe de symétrie de l'enceinte du filtre. Le filtrage s'effectue dans la profondeur de la couche de granules selon un flux ascendant et l'eau traitée est récupérée dans la partie haute du filtre, par un orifice situé près de son extrémité supérieure tandis que l'eau brute est introduite dans la partie basse du filtre située en dessous du lit flottant. L'opération de nettoyage du filtre s'effectue par rétrolavage en inversant le sens d'écoulement du fluide à l'intérieur du filtre et en utilisant de l'eau traitée s'écoulant à une vitesse supérieure à la vitesse minimale de fluidisation pour permettre l'expansion du lit et son nettoyage.

Ce genre d'appareil de filtration en profondeur, qui est le plus simple et le plus économique du point de vue constitutif, présente l'inconvénient de nécessiter une grande quantité d'eau traitée pour l'opération de rétrolavage. Cette quantité d'eau traitée nécessaire au nettoyage du filtre étant de l'ordre de plusieurs fois la contenance du filtre, ce processus entraîne un gaspillage important qui est contradictoire avec le fait qu'en recyclant et en traitant de l'eau, on essaie d'économiser celle-ci.

Un autre appareil de filtrage en profondeur et procédé associés est connu par US-A-4 547 286 qui enseigne l'utilisation d'un lit flottant constitué par des granules ou boulettes de matériaux flottants tels que du polyéthylène ou polypropylène ayant une densité proche de celle de l'eau et de l'ordre de 0,9. Ce document enseigne comme méthode de lavage l'utilisation de la méthode du lit agité en introduisant de l'air dans le fluide pour diminuer la densité apparente du fluide constitué par le liquide et le gaz par rapport aux granules de matériaux flottants.

Ce procédé , économe en consommation d'eau, nécessite l'apport d'un gaz ou d'un fluide secondaire pour faire varier la densité moyenne du fluide, ce qui rend plus complexe la constitution et le fonctionnement d'un tel filtre. Par ailleurs, ce procédé limite le choix des matériaux de filtrage à ceux ayant une densité inférieure de 10 à 20% de celle du fluide à traiter.

Il est également connu de nettoyer des filtres à lit flottant fixé dans un courant ascendant par un rétrolavage à gravité. Ce procédé est enseigné par US-A-4 446 027 dans lequel un lit flottant de macrosphères de verre de diamètre moyen de 0,7 mm et de coefficient d'uniformité 1,6 est fixé en dessous

2

d'un réservoir de fluide épuré. Ce lit flottant de faible épaisseur, de l'ordre de 0,3m est utilisé pour arrêter à sa surface les matières légères qui restent en suspension dans le fluide à la suite d'une première phase de décantation. Dans cette première phase, les matières lourdes décantent dans une zone de décantation d'un réservoir inférieur situé en dessous du lit flottant. Par ailleurs, en dehors de la zone de décantation, le fluide dans ce réservoir inférieur est animé d'un mouvement de circulation provoquant une agitation. La taille variable des billes constituant le lit flottant favorise la disposition des billes les plus grosses dans la partie supérieure du lit flottant et des billes les plus petites à la limite inférieure du lit flottant. Cette disposition diminue ainsi la possibilité pour les matières en suspension de pénétrer dans le filtre.

On réalise le rétrolavage en utilisant l'eau filtrée du réservoir supérieur qui provoque une expansion du lit flottant et la libération des matières en suspension qui s'étaient fixées sur la couche superficielle inférieure du lit flottant. Ce document enseigne, lors du processus de filtrage, la combinaison des phénomènes de floculation par agitation, de décantation et à titre additionnel de filtrage par écoulement ascendant dans un lit flottant fixé. En conséquence de l'encrassement faible et en surface du lit, le rétrolavage par gravité nécessite peu d'eau.

La quantité d'eau utilisée pour le rétrolavage serait certainement très supérieure dans le cas où l'on aurait à nettoyer un filtre utilisant, à titre de moyen de filtrage principal en profondeur, un lit flottant fixé. Ainsi US-A-4 582 609 enseigne l'utilisation d'un lit flottant fixé constitué par un aggloméré de microbilles creuses de verre liées par une résine et appelées macrosphères de verre, de granules ou boulettes de polymère, telles que des résines époxy ou de matières expansées telles que du polystyrène. Le rétrolavage par gravité du filtre est obtenu par augmentation de la quantité de fluide filtré contenu au-dessus du lit, par immersion du lit flottant monté dans un dispositif à ballast, puis par la chasse de l'eau filtrée à travers le lit flottant fixé en vue de créer un lit fluidisé. Cette chasse de l'eau filtrée est obtenue par immersion de l'ensemble ballast-lit flottant. Il est bien évident, dans ce cas, que la quantité de fluide traité, utilisée pour le rétrolavage est très importante et bien supérieure au pourcentage annoncé dans le brevet précédent. Par ailleurs, ce type de dispositif est de fabrication plus complexe et moins économique.

De même DE-A-3 433 472 enseigne un appareil de filtration à lit flottant fixé dans lequel une canalisation d'évacuation est disposée à proximité de l'extrémité inférieure de l'enceinte. Dans ce filtre, le nettoyage du lit flottant se fait par rétrolavage et grâce à la quantité d'eau qui se trouve entre la grille de fixation et la canalisation de sortie des eaux traitées située à une grande distance au-dessus de la grille, comme indiqué page 7, lignes 19 et 20. Outre la grande quantité d'eau nécessitée pour le lavage du lit flottant, ce dispositif ne permet pas un nettoyage du lit flottant par désimersion et défixation du lit puisque des moyens sont prévus pour maintenir le niveau minimum de liquide au-dessus de la partie supérieure de la grille maintenant le lit flottant. Le nettoyage est donc dépendant de la quantité d'eau filtrée se trouvant au-dessus du lit flottant et enfin le nettoyage du filtre ne peut se faire intégralement car l'évacuation des matières en suspension étant au-dessus de l'extrémité inférieure de l'enceinte, celle-ci ne peut jamais être complètement nettoyée.

GB-A-2 021 428 enseigne un appareil de filtration à lit flottant comportant un matériau granulaire ayant une gravité spécifique de 0,015 à 0,2 qui correspond à une partie de la fourchette des densités utilisées dans le dispositif de l'invention. Cependant, ces matériaux flottants sont utilisés dans un dispositif différent nécessitant le lavage du lit de filtration par agitation.

FR-A-2 538 800 enseigne un appareil de traitement biologique comportant une tuyauterie d'évacuation de l'eau traitée à la partie supérieure de l'enceinte, une canalisation d'amenée de l'eau à traiter et une canalisation d'évacuation des boues à la partie inférieure de l'enceinte. Des billes sont maintenus par une grille à proximité immédiate de la partie supérieure de l'enceinte. Toutefois ce dispositif ne fonctionne pas selon un lavage par désimmersion et défixation du lit flottant puisqu'une eau de lavage est injectée par le haut et les boues évacuées par une canalisation située au-dessus du dispositif répartiteur des eaux à traiter.

La présente invention a pour but de pallier les inconvénients de l'art antérieur et de proposer un appareil de filtration en profondeur à écoulement ascendant dans un lit flottant fixé de constitution simple et économique et n'entraînant pas, lors des phases de nettoyage, une consommation d'eau traitée.

Le premier but est atteint par le fait que l'appareil de filtration à écoulement ascendant d'un fluide à traiter constitué d'une enceinte (7) de forme prismatique ou cylindrique fermé à au moins une extrémité inférieure (15) contenant des particules de filtrage (16) de densité inférieure à celle du fluide à traiter, les particules occupant un volume permettant la filtration en profondeur et pouvant atteindre le volume utile défini comme le volume disponible entre l'entrée du fluide à traiter et un moyen de retenue (12), les particules étant retenues par ce moyen (12) de façon à constituer un lit flottant fixé, l'enceinte comportant à son extrémité supérieure (14) une tuyauterie d'évacuation des fluides traités et à son extrémité inférieure (15) une tuyauterie (3) d'évacuation des matières en suspension filtrées, la tuyauterie (3) d'évacuation des matières en suspension filtrées a une forme de lyre avec évent (5) dont l'extrémité supérieure se situe au niveau maximum que peut occuper le fluide dans l'appareil et des dimensions permettant une vidange de la colonne de fluide contenue dans l'enceinte à une vitesse supérieure à la vitesse minimale de fluidisation, une tuyauterie d'alimentation (1) en fluide à traiter est disposée dans une zone de l'extrémité inférieure de l'enceinte située en dessous du niveau inférieur du lit flottant fixé, est caractérisé en ce que des moyens (10) mettent en communication la tuyauterie d'évacuation (3) avec l'intérieur de l'enceinte (7), l'event (5) a son extrémité supériemre située au-dessus du niveau maximum que peut occuper le fluide dans l'appareil les particules de filtrage ont une masse volumique particulaire comprise entre 5 Kg/m3 et 500 Kg/m3 , la tuyauterie d'alimentation en fluide à traiter est disposée au-dessus du niveau supérieur (30) de la tuyauterie d'évacuation (3) des saletés et la tuyauterie d'évacuation (2) des fluides traités setrouve à proximité immediate du moyen de retenne (12) du lit flottant fixé et en ce que le lit flottant fixé occupe 100%, du volume utile.

Selon une autre caractéristique la tuyauterie d'évacuation des fluides traités communique avec l'enceinte par un orifice de l'extrémité inférieure de l'enceinte.

Selon une autre caractéristique, la masse volumique particulaire est comprise entre 5 et 150 Kg/m3.

Selon une autre disposition, la masse volumique particulaire est choisie de façon avantageuse égale à 50 Kg/m3 et correspond à des particules en polystyrène expansé ou en polyéthylène expansé.

Selon une autre caractéristique, la dimension de la tuyauterie de vidange (3) est choisie de façon que la vitesse de vidange soit comprise entre la vitesse minimale de fluidisation Vmf et huit fois cette vitesse.

Selon une autre disposition avantageuse de l'invention, la dimension de la tuyauterie de vidange (3) est choisie de façon que la vitesse soit de préférence de l'ordre de 1,1 à 1,5 fois la vitesse minimale de fluidisation Vmf.

Selon une autre disposition de l'invention, l'appareil comporte une tuyauterie d'amenée de fluide communiquant par une deuxième vanne avec la partie inférieure de l'enceinte pour balayage du concentrat des saletés résiduelles en fin de processus de nettoyage.

Selon une autre caractéristique, la tuyauterie d'alimentation en fluide à traiter comporte un dispositif répartiteur de la phase liquide à traiter.

Selon une autre particularité, l'appareil comporte une tuyauterie de mise à l'air débouchant à travers une troisième vanne dans la partie supérieure de l'enceinte.

Un autre but de l'invention est de proposer un procédé de nettoyage d'un filtre à lit flottant fixé, ne nécessitant pas une consommation d'eau traitée et mettanten oeuvre un phénomène original lors d'une phase de désimmersion ou dénoyage.

Ce but est atteint par le fait que le procédé de nettoyage d'un appareil de filtration à écoulement ascendant dans un lit immergé fixé constitué par un matériau de masse volumique inférieure à celle du fluide à traiter, est caractérisé en ce qu'il comporte les étapes suivantes:

- mise à l'air , dans le cas d'un filtre fermé, par une vanne (9) de la partie supérieure de l'appareil;
- ouverture par la vanne (10) de la tuyauterie d'évacuation et vidange à une vitesse supérieure à la vitesse minimale de fluidisation Vmf;
- désimmersion progressive du lit fixé par balayage de la partie immergée (160,161) par une zone de lit fluidisé (161);
- rinçage des particules non immergées situées en dessous de la tuyauterie (1) d'alimentation du fluide à traiter et des billes immergées (160);
- fermeture de la vanne (10) de la tuyauterie d'évacuation des boues sales .

Selon une autre caractéristique du procédé de nettoyage, l'appareil est remis en condition de fonctionnement par les opérations suivantes :

- balayage du concentrat résiduel des matières en suspension par fermeture d'une quatrième vanne d'alimentation en fluide à traiter et ouverture de la deuxième vanne d'amenée du fluide de balayage dans la partie inférieure de l'enceinte avant fermeture de la première vanne de la tuyauterie d'évacuation des saletés.
- Fermeture de la troisième vanne de mise à l'air.

Selon une autre caractéristique, le procédé de lavage d'un filtre constitué d'un lit de matériaux flottants fixé dans la phase de filtrage est caractérisé par un lavage au fluide à traiter seule, sans pompe de lavage ni surpresseur de lavage, et par défixation du lit de matériaux pendant la phase de lavage.

Selon une autre caractéristique le procédé de nettoyage est caractérisé en ce que la vitesse de vidange est comprise entre la vitesse minimale de fluidisation Vmf et huit fois cette vitesse.

Selon une autre caractéristique le procédé de nettoyage est caractérisé en ce que la vitesse de vidange est de préférence choisie de l'ordre de 1,1 à 1,5 fois la vitesse minimale de fluidisation Vmf.

D'autres caractéristiques et avantages de la présente invention apparaîtront plus clairement à la lecture de la description ci-après faite en référence aux dessins annexés relatifs à un filtre fermé, dans lesquels :

- la figure 1 représente l'appareil de filtrage selon l'invention dans son état de fonctionnement en phase de filtration;
- la figure 2 représente l'appareil de filtration selon l'invention lors de la phase de nettoyage selon le procédé de l'invention.
- la figure 3 représente l'appareil de filtration selon l'invention en fin de phase de nettoyage correspondant à l'étape de rinçage du procédé de nettoyage.

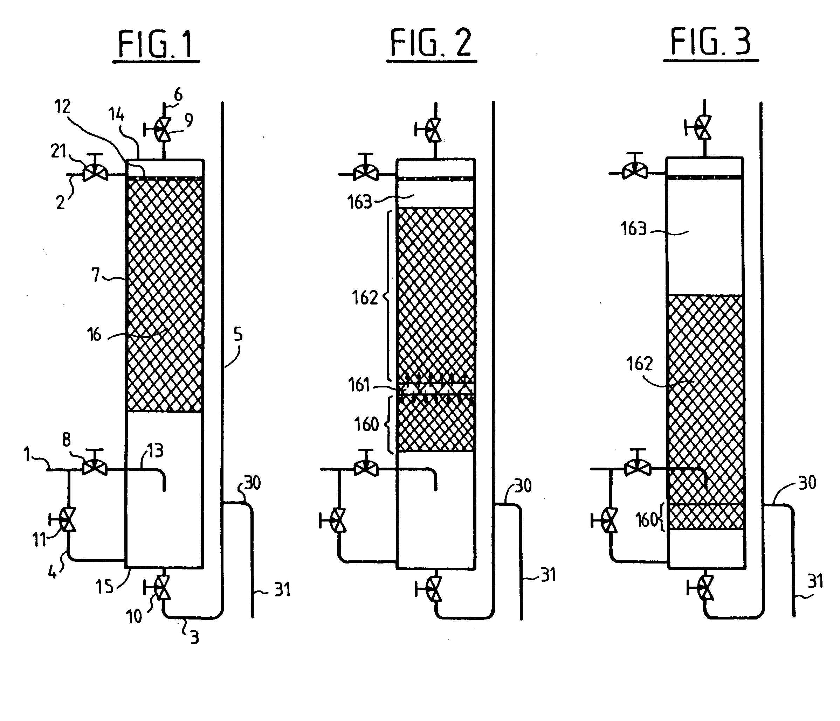

L'appareil de filtration en profondeur de la figure 1 comporte une enceinte prismatique ou cylindrique (7) fermée à ses extrémités bar un couvercle supérieur (14) et un couvercle inférieur (15). Une tuyauterie (2) d'évacuation de l'eau traitée débouche par un orifice du couvercle (14) dans l'enceinte. Dans la suite du texte on utilise comme fluide de l'eau mais il est bien évident que l'invention ne sera pas limitée à l'utilisation d'un tel fluide. Une vanne (21) disposée sur la tuyauterie (2) permet d'ouvrir ou de fermer l'évacuation de l'eau traitée. Une deuxième tuyauterie (6) débouche également dans la partie supérieure de l'enceinte et comporte une vanne (9) de mise à l'air de cette enceinte. A proximité immédiate de la plaque supérieure (14) se trouve également un moyen physique de fixation du lit tel qu'une grille (12) ou plaque perforée assurant le maintien d'un lit flottant (16) pendant la phase de filtration. Il est bien évident que les dimensions des orifices de ce moyen physique (12) sont adaptées aux dimensions des granules ou boulettes de matière constituant le lit flottant. Cette matière constituant le lit flottant peut être toute matière ayant une masse volumique particulaire inférieure à celle du fluide à traiter, en l'occurence l'eau. On choisira des matières ayant des masses volumiques comprises entre 5 Kg/m3 et 500 Kg/m3 ou une densité de 0,005 à 0,5. De façon avantageuse, on se limitera à la fourchette de 5 à 150 Kg/m3 et en particulier, un mode de réalisation de l'invention est celui consistant à choisir comme matière des particules de polystyrène expansé ou de polyéthylène expansé ayant une masse volumique particulaire de 50 Kg/m3 ou une densité de 0,05. Comme nous verrons par la suite, cette masse volumique faible par rapport à la masse volumique de l'eau joue un rôle important dans le phénomène de nettoyage. Les particules de densité ou masse volumique plus faibles ont donc tendance à flotter et viennent s'agglutiner contre le moyen physique (12) de façon à former un lit flottant fixé dans lequel les particules sont en contact entre elles. Ce lit flottant fixé, constitué par les granules peut occuper pratiquement 100% du volume utile défini comme étant le volume compris entre la grille (12) et la tuyauterie d'amenée d'eau (13). En dessous de la limite inférieure du lit flottant fixé, et à une certaine distance de la plaque inférieure (15) de l'enceinte, se trouve une tuyauterie (1) d'alimentation en eau brute à traiter comportant une vanne (8) d'admission et de fermeture de l'eau brute et un dispositif répartiteur (13) pénétrant à l'intérieur de l'enceinte et assurant une répartition homogène des eaux brutes à traiter. Une tuyauterie de vidange (3) en forme de lyre communique par un orifice de la plaque inférieure (15) de l'enceinte avec la partie inférieure de l'enceinte. Cette communication est obturée ou autorisée par une vanne (10). Une dérivation de la tuyauterie d'arrivée d'eau brute (1), en amont de la vanne (8), est constituée par une tuyauterie de dérivation (4) pour balayage du concentrat des saletés résiduelles communiquant avec l'enceinte par un orifice latéral de l'enceinte cylindrique proche du fond (15). Une vanne (11), placée sur cette tuyauterie (4), permet, après fermeture ou réduction de la vanne (8) de mettre en communication la tuyauterie d'arrivée d'eau brute (1) avec la partie inférieure de l'enceinte. La tuyauterie (3) est mise à l'air par un tuyau d'évent (5) dont l'extrémité supérieure se situe au-dessus du niveau maximum que peut occuper le fluide dans l'appareil de filtration. La tuyauterie en forme de lyre (3), prolongée par la tuyauterie d'évent, se raccorde à une tuyauterie horizontale (30) raccordée à une tuyauterie verticale (31) d'évacuation. La partie (30) se trouve à un niveau inférieur à celui de la tuyauterie (1) d'amenée d'eau brute permettant de fixer un niveau minimum du fluide en fin d'opération de lavage assurant la création d'une zone de fluide et d'une première zone (160) constituée de matériaux flottants dans un lit où les granules sont en contact, comme représente à la figure 3. On remarque que le tuyau (1) d'arrivée des eaux brutes à traiter se situe à un niveau supérieur à celui de la partie la plus haute de la tuyauterie de vidange (3). Sur la figure 1 on a représenté par un quadrillage le lit flottant fixé lorsque celui-ci est immergé, c'est-à-dire dans la phase de filtration. La dimension de la tuyauterie de vidange (3) est choisie de telle façon que lorsque l'on ouvre la vanne (10), la vitesse de vidange du fluide dans l'enceinte soit supérieure à la vitesse minimale de fluidisation Vmf des particules immergées dans le fluide. On pourra choisir cette vitesse comprise entre Vmf et 8Vmf et, de préférence pour ne pas augmenter dans des proportions trop importantes les dimensions de la tuyauterie de vidange (3), on choisit une valeur comprise entre 1,1Vmf et 1,5Vmf.

Pendant le procédé de filtration, les eaux brutes sont introduites par le répartiteur (13) et dans un écoulement ascendant remontent vers la partie supérieure du filtre en traversant le lit flottant fixé dans lequel les matières en suspension dans le fluide sont retenues par le lit. L'eau traitée débouchant par la grille (12) est évacuée par la tuyauterie (2). Au fur et à mesure de l'utilisation du filtre, le lit flottant fixé s'encrasse du bas vers le haut et à partir d'un moment déterminé par une certaine perte de charge, indiquée par un manomètre, non représenté, mesurant la différence de pression en bas et en haut du filtre, on établit la phase de nettoyage du filtre.

Le lavage, tel que réalisé dans la présente invention comporte trois phases : une phase d'abaissement du plan d'eau, une phase de rinçage et une phase de remplissage. A l'issue de ces trois phases, le filtre est de nouveau prêt à fonctionner. L'abaissement du plan d'eau s'effectue par l'ouverture de la vanne (10) pour la sortie des boues de lavage et ,dans le cas d'un filtre fermé,l'ouverture de la vanne (9) pour la mise à l'atmosphère de la partie supérieure de l'enceinte dans laquelle le plan d'eau s'abaisse rapidement. La vitesse d'écoulement du plan d'eau dans l'enceinte étant supérieure à la vitesse minimum de fluidisation et la masse volumique des particules de filtration étant très inférieure à la masse volumique de l'eau, il se produit un phénomène surprenant pendant cette phase. En effet, de façon inattendue, on a constaté qu'il se créait dans la colonne de matières granulées constituant le filtre, une deuxième zone dans laquelle les granules ne sont plus jointives et se trouvent dans des conditions proches de la fluidisation. Cette deuxième zone est représentée par la référence (161) sur la figure 2 et se trouve surmontée d'une troisième zone (162) dans laquelle les matériaux constituants le lit sont dénoyés ou désimmergés mais à nouveau en contact. La limite du plan d'eau se trouve à la limite entre la deuxième zone (161) et la troisième zone (162). En dessous de cette deuxième zone (161) on retrouve une première zone (160) constituée par des matériaux flottants dans un lit où les granules sont en contact. Au cours de ce phénomène se produit une légère expansion du lit flottant comme représenté à la figure 2. Ainsi on obtient, dans cette deuxième zone (161), un espacement entre les particules bien supérieur à celui qu'on obtiendrait dans le cadre d'une expansion de toute la masse par fluidisation, qu'on ne pourrait obtenir sans une consommation importante de liquide de fluidisation. Dans la deuxième zone (161) dans laquelle les matières de filtrage sont défixées, les matières en suspension plus denses que le liquide, qui étaient retenues par les granulés de filtrage peuvent décanter et se propager vers le bas au fur et à mesure que la deuxième zone (161) progresse en direction de la partie inférieure de l'enceinte de filtrage. Au cours de cette opération, les matières en suspension sont évacuées sous forme de boue de lavage par la tuyauterie (3) en même temps que l'eau.

On constate ainsi que, dans cette étape de lavage, on n'utilise absolument pas l'eau traitée mais l'eau brute qui se trouvait dans la partie du filtre constitué par le lit flottant pour effectuer le nettoyage de cette partie. A la fin de l'opération d'abaissement du plan d'eau, l'appareil se trouve dans la configuration représentée à la figure 3 dans laquelle une grande partie des matières granulées constituant le lit de filtrage représentée par les hachures de la troisième zone (162) est totalement dénoyée ou désimmergée tandis que le plan d'eau se trouve proche du niveau de la portion la plus haute (30) de la canalisation (3). Une faible partie des matériaux de filtrage forme un résidu de lit flottant immergé constitué par la première zone (160) qui supporte la colonne de la troisième zone (162) des matériaux émergés et nettoyés. L'arrivée d'eau par la tuyauterie (1) et par le répartiteur (13) est utilisée de façon avantageuse dans cette phase pour effectuer le rinçage de la zone désimmergée des matériaux flottants se trouvant en dessous de cette tuyauterie (1) et de la première zone immergée (160) dans laquelle se trouvent encore des matières en suspension dans une proportion plus importante que celle de l'eau brute. La tuyauterie (3) permet l'évacuation du concentrat de matières résiduelles au lavage restant dans la partie du filtre située en dessous de la canalisation d'amenée de l'eau brute. De cette façon, le concentrat de matières en suspension qui se trouve à la base du filtre est évacué. Une fois cette opération de rinçage effectuée, la vanne (10) est fermée et le filtre recommence à se remplir en eau brute amenée par la canalisation (1). Au fur et à mesure de la montée du plan d'eau, l'air intersticiel est entraîné et le matériau flottant (16) remonte jusqu'à être bloqué par la grille supérieure. La vanne (9) supérieure de mise à l'atmosphère permet l'évacuation finale de l'air et après fermeture de cette vanne (9), le filtre se remet automatiquement en service.

Dans une variante de réalisation, on peut améliorer l'évacuation du concentrat de matières en suspension présent sur le fond (15) du filtre en effectuant un balayage d'eau brute par fermeture de la vanne (8) et ouverture d'une vanne (11) pour amener par une tuyauterie de dérivation (4), l'eau au niveau du fond (15) .

Dans un mode de fonctionnement avantageux, on maintient l'alimentation en eau brute amenée par la tuyauterie (1) pendant la phase d'abaissement du plan d'eau. Ceci est possible car la vitesse d'écoulement d'eau brute amenée par cette tuyauterie (1) est de 5 à 10 fois inférieure à la vitesse d'évacuation de l'eau par la tuyauterie d'évacuation (3). Par conséquent, le maintien ou non de l'arrivée d'eau brute a peu d'importance sur l'opération de lavage et permet d'éviter d'avoir à manoeuvrer une vanne supplémentaire.

Le système de lavage faisant l'objet de l'invention et le filtre permettant ce système de lavage présentent l'avantage de ne pas nécessiter de système auxilliaire pour amener l'eau propre à grand débit pour réaliser le lavage. De même l'utilisation d'un système auxilliaire pour amener de l'air permettant une agitation du lit n'est pas nécessaire.

Enfin, comme on l'a vu ci-dessus, le procédé de lavage présente l'avantage d'utiliser au mieux, lors de la phase de lavage, les caractéristiques naturelles du matériau flottant et des matières en suspension retenues lors de la filtration. En effet, les matières en suspension retenues dont la densité est supérieure à celle de l'eau ont la tendance naturelle de descendre par décantation et sont entraînées par le flux descendant de l'eau. D'autre part, le matériau flottant de masse volumique très inférieure à la masse volumique du fluide à traiter a naturellement tendance à s'échapper de la phase liquide et contribue au phénomène de défixation et de fluidisation en créant une deuxième zone (161) qui balaie l'ensemble du lit pendant l'abaissement rapide du niveau de l'eau. Le nettoyage du filtre s'effectue très rapidement en quelques secondes, ce qui d'une part réduit à néant la consommation d'eau traitée et d'autre part minimise de façon très importante la consommation d'eau brute pendant cette opération de nettoyage. Par ailleurs, l'eau brute chargée d'un concentrat de matières en suspension évacué par la tuyauterie (3) peut être envoyée vers un décanteur pour ensuite être recyclée dans l'installation de filtrage.

La description a été effectuée dans le cadre d'un filtre fermé, mais il est bien évident que l'invention s'applique également au cas d'un filtre ouvert, auquel cas les opérations de mise à l'air et de fermeture de vanne de mise à l'air ne sont plus nécessaires.

Pour fixer les idées, on donne ci-après un exemple de comparaison des résultats obtenus avec un filtre selon l'invention et un filtre classique à sable.

Les essais sont effectués sur une eau brute (de surface) contenant 26 mg/l en matières en suspension (MeS), traitée avec du chlorure ferrique.

Les matériaux sont placés dans des colonnes de diamètre 150 mm. L'épaisseur de la couche filtrante est de 1 m dans chacun des deux cas.

Les matériaux utilisés et les résultats obtenus sont ceux représentés sur le tableau de la page suivante :

| Filtre | Lit flottant | Sable |
|---|---|---|
| Matériau | Billes polystyrène expansé | Sable |
| T E mm | 1,36 | 1,33 |
| C U | 1,30 | 1,30 |
| $d_R$ | $51.10^{-3}$ | 2,6 |
| Vmf en m/h | 50 | 70 |
| Perte d'eau propre | $0,8 \ m^3/m^2$ | $4,6 \ m^3/m^2$ |
| Perte d'eau traitée | $2,25 \ m^3/m^2$ | $6 \ m^3/m^2$ |
| eau sale recueillie | $1,75 \ m^3/m^2$ | $6 \ m^3/m^2$ |

Mis à part les densités, les caractéristiques granulométriques de ces deux matériaux sont sensiblement identiques.

TE (taille effective) = taille en mm du tamis traversé par 10% du poids des matériaux filtrants. CU est le coefficient d'uniformité. $d_R$ est la densité réelle. Vmf est la vitesse minimale de fluidisation.

L'alimentation en eau brute + réactif est issue d'un circuit commun.

Le réglage de l'organe de régulation de la filtration est, dans les deux cas, effectué pour obtenir 128 l/h en sortie, soit une vitesse de filtration de 8 m/h.

Le filtre à lit flottant est lavé de la façon décrite ci-dessus. La vitesse initiale d'évacuation de l'eau, lors du dénoyage, est de 70 m/h = 1,4 Vmf.

Le filtre à sable est lavé de la façon suivante :

- 5 min de soufflage air (55 m/h) + eau (15 m/h);
- 10 min de rinçage à l'eau du réseau à 20 m/h de vitesse ascensionnelle.

Le lavage des filtres est effectué quand la turbidité de l'eau filtrée atteint 1 NTU.

En conclusion, à résultats de filtration comparables, obtenus avec les deux matériaux, filtre à lit flottant et filtre à sable, et pouvant se résumer comme suit :

- turbidité minimale d'eau filtrée = 0,3 à 0,4 NTU;
- une turbidité finale de l'eau filtrée de 1 NTU qui correspond à une rétention de matières en suspension de 1,7kg/m² et une perte de charge de 0,8 m de colonne d'eau, on constate donc que les pertes d'eau propre sont 6 fois moindres avec l'invention, que les pertes d'eau traitée sont au moins 3 fois moins importantes avec l'invention, que la production d'eau sale est 3,5 fois moins importante que celle du filtre à sable et que l'invention ne consomme pas d'air.

De même, on remarque que le principe de l'invention est totalement différent de celui du brevet US-A-4 446 027 dans lequel l'eau à traiter contient 300 mg/l de matière en suspension, la vitesse de filtration est de 5 m/h alors que la perte de charge en fin de cycle n'est que de 0,05 m. Ceci veut dire qu'avec une eau plus chargée de matières, le filtre ne s'encrasse pas en profondeur et a une porte de charge faible car une grande partie des matières décante par suite de la vitesse plus faible de filtration. Contrairement à l'invention qui n'utilise pas la décantation et utilise toute la profondeur du lit flottant pour filtrer, le brevet américain US 4 446 027 utilise seulement un effet surfacique.

**Revendications**

1. Appareil de filtration à écoulement ascendant d'un fluide à traiter constitué d'une enceinte (7) de forme prismatique ou cylindrique fermé à au moins une extrémité inférieure (15) contenant des particules de filtrage (16) de densité inférieure à celle du fluide à traiter, les particules occupant un volume permettant la filtration en profondeur et pouvant atteindre le volume utile défini comme le volume disponible entre l'entrée du fluide à traiter et un moyen de retenue (12), les particules étant retenues par ce moyen (12) de façon à constituer un lit flottant fixé, l'enceinte comportant à son extrémité supérieure (14) une tuyauterie d'évacuation (2) des fluides traités et à son extrémité inférieure (15) une tuyauterie (3) d'évacuation des matières en suspension filtrées, la tuyauterie (3) d'évacuation des matières en suspension filtrées a une forme de lyre avec évent (5) et des dimensions permettant une vidange de la colonne de fluide contenue dans l'enceinte à une vitesse supérieure à la vitesse minimale de fluidisation, une tuyauterie d'alimentation (1) en fluide à traiter est disposée dans une zone de l'extrémité inférieure de l'enceinte située en dessous du niveau inférieur du lit flottant fixé, caractérisé en ce qu'une première vanne (10) permet la mise en communication de la tuyauterie d'évacuation (3) avec l'intérieur de l'enceinte (7), l'évent (5) a son extrémité supérieure située au-dessus du niveau maximum que peut occuper le fluide dans l'appareil, les particules de filtrage ont une masse volumique particulaire comprise entre 5 Kg/m3 et 500 Kg/m3, la tuyauterie d'alimentation (1) en fluide à traiter est disposée au-dessus du niveau supérieur (30) de la tuyauterie d'évacuation (3) des saletés et la tuyauterie d'évacuation (2) des fluides traités se trouve à proximité immédiate du moyen de retenue (12) du lit flottant fixé et en ce que le lit flottant fixé occupe 100 % du volume utile.

2. Appareil selon la revendication 1, caractérisé en ce que la tuyauterie d'évacuation (3) communique avec l'enceinte (7) par un orifice de l'extrémité inférieure (15) de l'enceinte (7).

3. Appareil selon la revendication 1 ou 2, caractérisé en ce que la masse volumique particulaire est comprise entre 5 et 150 Kg/m3.

4. Appareil selon une des revendications 1 à 3, caractérisé en ce que la masse volumique particulaire est choisie de façon avantageuse égale à 50 Kg/m3 et correspond à des particules en polystyrène expansé ou en polyéthylène expansé.

5. Appareil selon une des revendications 1 à 4, caractérisé en ce que la dimension de la tuyauterie de vidange (3) est choisie de façon que la vitesse de vidange soit comprise entre la vitesse minimale de fluidisation Vmf et huit fois cette vitesse.

6. Appareil selon la revendication 5, caractérisé en ce que la dimension de la tuyauterie de vidange (3) est choisie de façon que la vitesse soit de préférence de l'ordre de 1,1 à 1,5 fois la vitesse minimale de fluidisation Vmf.

**7.** Appareil selon une des revendications précédentes, caractérisé en ce qu'il comporte une tuyauterie (4) d'amenée de fluide communiquant par une deuxième vanne (11) avec la partie inférieure de l'enceinte (7) pour balayage du concentrat de saletés résiduelles en fin de processus de nettoyage.

**8.** Appareil selon une des revendications précédentes, caractérisé en ce que la tuyauterie d'alimentation (1) en fluide à traiter comporte un dispositif répartiteur (13) du fluide à traiter.

**9.** Appareil selon une des revendications précédentes, caractérisé en ce qu'il comporte une tuyauterie (6) de mise à l'air débouchant à travers une troisième vanne (9) dans la partie supérieure de l'enceinte (7).

**10.** Procédé de nettoyage d'un appareil de filtration à écoulement ascendant dans un lit immergé fixé constitué par un matériau de masse volumique inférieure à celle du fluide à traiter, selon une des revendications précédentes, caractérisé en ce qu'il comporte les étapes suivantes:
- mise à l'air , dans le cas d'un filtre fermé, par la troisième vanne (9) de la partie supérieure de l'appareil;
- ouverture par la première vanne (10) de la tuyauterie d'évacuation et vidange à une vitesse supérieure à la vitesse minimale de fluidisation Vmf;
- désimmersion progressive du lit fixé par balayage de la partie immergée (160,161) par une zone de lit fluidisé (161);
- rinçage des particules non immergées situées en dessous de la tuyauterie (1) d'alimentation en fluide à traiter et des billes immergées (160);
- fermeture de la première vanne (10) de la tuyauterie d'évacuation des boues sales .

**11.** Procédé de nettoyage selon la revendication 10, caractérisé en ce que l'appareil est remis en condition de fonctionnement par l'opération suivante :
- balayage du concentrat résiduel des matières en suspension par fermeture d'une quatrième vanne (8) d'alimentation en fluide à traiter et ouverture de la deuxième vanne (11) d'amenée de fluide de balayage dans la partie inférieure de l'enceinte avant fermeture de la première vanne (10) de la tuyauterie d'évacuation des saletés;
- fermeture de la troisième vanne (9) de mise à l'air.

**12.** Procédé de lavage, d'un filtre constitué d'un lit de matériaux flottants fixé dans la phase de filtrage, selon la revendication 10, caractérisé par un lavage au fluide à traiter seule, sans pompe de lavage ni surpresseur de lavage, et par défixation du lit de matériaux pendant la phase de lavage.

**13.** Procédé de nettoyage selon une des revendications 10 ou 11, caractérisé en ce que la vitesse de vidange est comprise entre la vitesse minimale de fluidisation Vmf et huit fois cette vitesse.

**14.** Procédé de nettoyage selon une des revendications 10 ou 11, caractérisé en ce que la vitesse de vidange est de préférence choisie de l'ordre de 1,1 à 1,5 fois la vitesse minimale de fluidisation Vmf.

**Claims**

**1.** Device for the ascending flow filtering of a liquid to be treated and constituted by a prismatic or cylindrical chamber (7) closed at least at one lower extremity (15) containing filtering particles (16) with a density lower than that of the fluid to be treated, the particles occupying a volume allowing for filtering at depth and able to attain the effective volume defined as the available volume between the inlet of the fluid to be treated and a retaining device (12), the particles being retained by said device (12) so as to constitute a fixed floating bed, the chamber including at its upper extremity (14) a pipe (2) for evacuating the treated fluids and at its lower extremity (15) a pipe (3) for removing filtrated suspended substances, the pipe (3) for removing the filtrated suspended substances having the shape of a lyre with a vent (5) and dimensions allowing for a draining of the fluid column contained in the chamber at a rate exceeding the minimal fluidization rate, a pipe (1) for feeding the fluid to be treated being disposed in one zone of the lower extremity of the chamber situated below the lower level of the fixed floating bed, wherein one first valve (10) enables the evacuation pipe (3) to be placed in communication with the inside of the chamber (7), the vent (5) having its upper extremity situated above the maximum level able to be occupied by the fluid in the device, the filtering particles having a particular density of between 5 Kg/m3 and 500 Kg/m3, the pipe (1) for feeding the fluid to be treated being disposed above the upper level (30) of the pipe (2) for removing the treated fluids and the pipe (2) for removing the treated fluids being located immediately close to the retaining device (12) of the fixed floating bed and wherein the fixed floating bed occupies 100% of the effective volume.

2. Device according to claim 1, wherein the evacuation pipe (3) communicates with the chamber (7) via one orifice of the lower extremity (15) of the chamber (7).

3. Device according to claim 1 or 2, wherein the particular density is between 5 and 150 Kg/m3.

4. Device according to any one of claims 1 to 3, wherein the particular density is selected as being preferably equal to 50 Kg/m3 and corresponds to expanded polystyrene or polyethylene particles.

5. Device according to any one of claims 1 to 4, wherein the size of the drainage pipe (3) is selected so that the draining rate is between the minimal fluidization rate Vmf and eight times this rate.

6. Device according to claim 5, wherein the size of the drainage pipe (3) is selected so that the rate is preferably about between 1.1 and 1.5 times the minimum fluidization rate Vmf.

7. Device according to any one of the preceding claims, wherein it comprises a fluid intake pipe (4) communicating via a second valve (11) with the lower portion of the chamber (7) for scanning the concentration of residual dirt at the end of the cleaning process.

8. Device according to any one of the preceding claims, wherein the pipe (1) for feeding the fluid to be treated comprises a device (13) for distributing the fluid to be treated.

9. Device according to any one of the preceding claims, wherein it comprises an aerating pipe (6) opening through a third valve (9 into the upper portion of the chamber (7).

10. Method for cleaning an ascending flow filtration device in a fixed immersed bed constituted by a substance with a density lower than that of the fluid to be treated according to any one of the preceding claims, wherein it comprises the following stages :
   - in the case of a closed filter, of aerating the upper portion of the device by the third valve (9);
   - opening by the first valve (10) of the evacuation and drainage pipe at a rate exceeding the minimum fluidization rate Vmf ;
   - the progressive immersion removal of the fixed bed by scanning the immersed portion (160, 161) by a fluidized bed zone (161) ;
   - rinsing the non-immersed particles situated below the pipe (1) for feeding the fluid to be treated and immersed balls (160) ;
   - closing of the first valve (10) of the pipe for evacuating the dirty mud.

11. Cleaning method according to claim 10, wherein the device is placed back into an operating condition by means of the following operation :
   - scanning of the residual concentrate of the suspended materials by closing of a fourth valve (8) for feeding the fluid to be treated and opening of the second valve (11) for admitting the scanning fluid into the lower portion of the chamber prior to closing of the first valve (10) of the pipe for removing the dirt;
   - closing of the third aeration valve (9).

12. Method for washing a filter constituted by a fixed bed of floating substances in the filtering phase according to claim 10, characterized by a washing with the fluid to be treated alone without using any washing pump or washing supercharger and by unfixing the bed of substances during the washing phase.

13. Cleaning method according to claim 10 or 11, wherein the drainage rate is between the minimum fluidization rate Vmf and eight times this rate.

14. Cleaning method according to claim 10 or 11, wherein the drainage rate is preferably selected as being about between 1.1 and 1.5 times the minimum fluidization rate Vmf.

**Patentansprüche**

1. Filtergerät mit aufsteigendem Abfluß eines zu behandelnden Mediums, bestehend aus einem prismen- oder zylinderförmigen Behälter (7), der an mindestens einer unteren stelle (15) geschlossen ist und Filterpartikel (16) enthält, deren Dichte unter der des zu filternden Mediums ist, wobei aufgrund des Volumens der Partikel eine Tiefenfilterung erfolgen und das Nutzvolumen erreicht werden kann, das als das zwischen dem Eintritt des zu behandelnden Mediums und einer Rückhaltevorrichtung (12) verfügbares Volumen definiert ist, wobei die Partikel mit dieser Vorrichtung (12) derart zurückgehalten werden, daß sie ein festes schwimmendes Bett bilden und der Behälter auf der Oberseite (14) eine Abflußrohrleitung (2) zur Ableitung des behandelten Mediums und auf der Unterseite (15) eine Abflußrohrleitung (3) zur Ableitung der ausgefilterten schwebenden Stoffe in Form eines Lyrabogens mit Entlüftungsrohr (5) besitzt, wobei aufgrund der Abmessungen des Behälters das darin enthaltene Medium mit einer Geschwindigkeit entleert werden kann, die über der Mindestfluidisierungsgeschwindigkeit liegt und eine Zuflußrohrleitung (1) zur Beschickung des Gerätes mit zu behandelndem Medium im Bereich des Behälterunterteils unterhalb der Untergrenze des festen schwimmenden Bettes angebracht ist, **dadurch gekennzeichnet, daß** durch ein erstes Ventil (10) eine Verbindung zwischen der Abflußrohrleitung (3) und dem Inneren des Behälters (7) hergestellt werden kann, das Entlüftungsrohr (5) über den Höchstfüllstand des Mediums im Gerät hinausragt, die Filterpartikel eine volumenbezogene Partikelmasse zwischen 5 kg/m3 und 500 kg/m3 besitzen, die Zuflußrohrleitung (1) über dem oberen Niveau (30) der Abflußrohrleitung (3) für Schmutzstoffe und die Abflußrohrleitung (2) für behandeltes Medium in unmittelbarer Nähe der Rückhaltevorrichtung (12) des festen schwimmenden Bettes liegt, sowie dadurch, daß das feste schwimmende Bett das Nutzvolumen zu hundert Prozent ausfüllt.

2. Gerät nach Patentanspruch 1, dadurch gekennzeichnet, daß die Abflußrohrleitung (3) über eine Öffnung an der Unterseite (15) des Behälters (7) mit dessen Innerem verbunden ist.

3. Gerät nach Patentanspruch 1 oder 2, dadurch gekennzeichnet, daß die volumenbezogene Partikelmasse zwischen 5 kg/m3 und 150 kg/m3 liegt.

4. Gerät nach Patentanspruch 1 bis 3, dadurch gekennzeichnet, daß die Volumenbezogene Partikelmasse vorzugsweise so gewählt wird, daß sie bei 50 kg/m3 liegt und geschäumten Styropor- oder Polyethylenpartikeln entspricht.

5. Gerät nach Patentanspruch 1 bis 4, dadurch gekennzeichnet, daß die Abmessungen der Abflußrohrleitung (3) so gewählt ist, daß die Entleergeschwindigkeit zwischen der Mindestfluidisierungsgeschwindigkeit Vmf und deren Achtfachem liegt.

6. Gerät nach Patentanspruch 5, dadurch gekennzeichnet, daß die Abmessungen der Abflußrohrleitung (3) so gewählt ist, daß die Entleergeschwindigkeit vorzugsweise zwischen dem 1,1-fachen und dem 1,5-fachen Wert der Mindestfluidisierungsgeschwindigkeit Vmf liegt.

7. Gerät nach einem der vorhergehenden Patentansprüche, dadurch gekennzeichnet, daß es eine Zuflußrohrleitung (4) für das zu behandelnde Medium besitzt, die über ein zweites Ventil (11) mit der Unterseite des Behälters (7) verbunden ist, damit nach beendetem Reinigungsprozeß die Verschmutzungsrückstände beseitigt werden können.

8. Gerät nach einem der vorhergehenden Patentansprüche, dadurch gekennzeichnet, daß die Zuflußrohrleitung (1) für das zu behandelnde Medium eine Verteilvorrichtung (13) für das zu behandelnde Medium besitzt.

9. Gerät nach einem der vorhergehenden Patentansprüche, dadurch gekennzeichnet, daß es auf der Oberseite des Behälters (7) eine Rohrleitung (6) mit einem dritten Ventil (9) für den Luftaustritt besitzt.

10. Verfahren zum Reinigen eines Filtergerätes mit aufsteigendem Abfluß mit festem schwimmendem Bett, dessen volumenbezogene Masse unter der des zu filternden Mediums liegt, nach einem der vorhergehenden Patentansprüche, dadurch gekennzeichnet, daß das Verfahren aus folgenden Schritten besteht:
    - bei geschlossenem Filter Luftaustritt über das dritte Ventil (9) auf der Oberseite des Behälters (7),

- Öffnen der Abfluß- und Entleerrohrleitung über das erste Ventil (10) mit einer Geschwindigkeit, die über der Mindestfluidisierungsgeschwindigkeit Vmf liegt,
- forschreitenden Entflutung des festen Bettes durch Spülen des gefluteten Teils (160, 161) durch einen Bereich fluidisierten Mediums (161),
- Spülen der nicht gefluteten Partikel über der Zuflußrohrleitung (1) für das zu behandelnde Medium und der gefluteten Kugeln (160),
- Schließen des ersten Ventils (10) der Rohrleitung für den Abfluß des Schmutzschlammes.

11. Reinigungsverfahren nach Patentanspruch 10, dadurch gekennzeichnet, daß das Gerät durch folgende Operationen wieder betriebsbereit gemacht wird:
- Spülen des Restkonzentrates der Suspension durch Schließen eines vierten Ventils (11) für die Zufuhr von Spülmedium im Unterteil des Gehäuses vor dem Schließen des ersten Ventils (10) der Rohrleitung für den Abfluß des Schmutzschlammes,
- Schließen des dritten Ventils (9) für Luftaustritt.

12. Verfahren zum Waschen eines Filters in Form eines festen Bettes aus in der Filterphase schwimmenden Partikeln nach Patentanspruch 10, gekennzeichnet durch ein Waschen ausschließlich mit dem zu behandelnden Medium, ohne Verwendung einer Pumpe oder Überdruckvorrichtung und durch das Lösen des Filterbettes beim Waschen.

13. Waschverfahren nach Patentanspruch 10 oder 11, dadurch gekennzeichnet, daß die Entleergeschwindigkeit zwischen der Mindestfluidisierungsgeschwindigkeit Vmf und deren Achtfachem liegt.

14. Waschverfahren nach Patentanspruch 10 oder 11, dadurch gekennzeichnet, daß die Entleergeschwindigkeit vorzugsweise zwischen dem 1,1-fachen und dem 1,5-fachen Wert der Mindestfluidisierungsgeschwindigkeit Vmf liegt.

FIG. 1

FIG. 2

FIG. 3